# EUROPÄISCHE PATENTSCHRIFT

(11) **EP 2 415 100 B1**
(45) Veröffentlichungstag und Bekanntmachung des Hinweises auf die Patenterteilung: **14.09.2016**
(21) Anmeldenummer: 10704905.8
(22) Anmeldetag: 10.02.2010
(51) Int. Cl.: H01M 2/02, H01M 2/12, H01M 10/04, H01M 10/05

(54) **GALVANISCHE ZELLE MIT LÖSBAREM VERBINDUNGSBEREICH**
GALVANIC CELL HAVING A RELEASABLE CONTACT ZONE
CELLULE GALVANIQUE AVEC UNE ZONE DE RACCORDEMENT SÉPARABLE

(30) Priorität: 31.03.2009 DE 102009015687
(43) Veröffentlichungstag der Anmeldung: 08.02.2012
(73) Patentinhaber: Li-Tec Battery GmbH, 01917 Kamenz (DE)
(72) Erfinder: SCHÄFER, Tim, 99768 Harztor (DE); GUTSCH, Andreas, 59348 Lüdinghausen (DE)
(74) Vertreter: JENSEN & SON
(86) Internationale Anmeldenummer: PCT/EP2010/000819
(87) Internationale Veröffentlichungsnummer: WO 2010/112104

(56) Entgegenhaltungen:
- EP-A1- 1 845 569
- EP-A2- 0 862 230
- DE-A1-102005 042 916
- US-A1- 2003 148 173
- US-A1- 2004 038 126

## Beschreibung

Die Erfindung betrifft eine galvanische Zelle gemäß dem Oberbegriff des Anspruchs 1. Die Erfindung wird im Zusammenhang mit einer Lithium-Ionen-Batterie zur Versorgung eines Kraftfahrzeugs beschrieben. Es wird darauf hingewiesen, dass die Erfindung auch unabhängig von der Chemie, der Bauart der galvanischen Zelle oder der Art des versorgten Antriebs Anwendung finden kann.

Die europäische Offenlegungsschrift EP 0 862 230 A2 offenbart eine Sekundärbatterie mit einem ersten Sammelabschnitt, der mit einer negativen Elektrode verbunden ist, und einem zweiten Sammelabschnitt, der mit einer äußeren Schaltung verbunden ist, wobei die Sekundärbatterie ein Haltemittel zum Halten einer elektrischen Verbindung zwischen den Sammelabschnitten ein Freigabemittel aufweist, um das Haltemittel bei einem internen Druckanstieg freizugeben.

Die amerikanische Offenlegungsschrift US 2003/0148173 A1 offenbart eine Sekundärbatterie mit einem versiegelten Bereich und einer Sicherheitseinrichtung in dem versiegelten Bereich, welche durch in der Sekundärbatterie auftretende Wärme geschmolzen werden kann.

Die amerikanische Offenlegungsschrift US 2004/0038126 A1 offenbart eine Batteriezelle mit einem Sicherheitsventil, das bei einem übermäßigen Druck in der Batteriezelle Gas nach außen leitet, wobei ein Öffnungsteil an dem versiegelten Bereich ein Material mit einem niedrigeren Schmelzpunkt als das Material des versiegelten Bereiches aufweist.

Die deutsche Offenlegungsschrift DE 10 2005 042 916 A1 offenbart einen Stapel aus abwechselnd übereinander gestapelten und fixierten Separatoren und Elektroden, wobei die Stapel an zumindest einer Seite oder einer Kante des Stapels eine Klebung aus einem organischen Kleber aufweisen, welche die Elektroden und die Separatoren des Stapels miteinander verklebt.

Aus dem Stand der Technik sind galvanische Zellen bekannt, welche beispielsweise im Fall einer mechanischen Beschädigung oder bei Übertemperatur gespeicherte Energie möglicherweise unkontrolliert freigesetzten. Dadurch kann die Umgebung gefährdet werden.

Die Aufgabe der Erfindung ist es, eine galvanische Zelle sicherer zu gestalten.

Diese Aufgabe wird gelöst von einer galvanischen Zelle mit den Merkmalen des Anspruchs 1. Bevorzugte und vorteilhafte Weiterbildungen sind Gegenstand der abhängigen Ansprüche. Eine bevorzugte Verwendung der erfindungsgemäßen galvanischen Zelle ist Gegenstand eines nebengeordneten Anspruchs.

Eine erfindungsgemäße galvanische Zelle weist einen im wesentlichen prismatischen Elektrodenstapel, einen Elektrolyt und eine Einhausung auf. Die Einhausung ist vorgesehen, den Elektrodenstapel wenigstens teilweise zu umschließen. Der Elektrodenstapel ist mehrschichtig ausgebildet ist und weist wenigstens eine Anodenschicht, eine Kathodenschicht und eine Separatorschicht auf.

Die wenigstens eine Separatorschicht ist wenigstens teilweise zwischen einer Anodenschicht und einer Kathodenschicht angeordnet. Die wenigstens eine Separatorschicht nimmt den Elektrolyt wenigstens teilweise auf. Die wenigstens eine Anodenschicht, die wenigstens eine Kathodenschicht und die wenigstens eine Separatorschicht sind vorgesehen, in wenigstens einem Verbindungsbereich, mittels wenigstens einer lösbaren Verbindungseinrichtung lösbar miteinander verbunden zu sein, welche ausgewählt ist aus Hefteinrichtungen, Heftklammern, Heftfaden, Klemmeinrichtungen, Klemmen, Bändern und umlaufenden Gurten, wobei eine Verbindungswirkung der wenigstens einen lösbaren Verbindungseinrichtung oberhalb einer vorgegebenen Temperatur abnimmt, sodass sich benachbarte Schichten des Elektrodenstapels oberhalb der vorgegebenen Temperatur wenigstens bereichsweise voneinander entfernen.

Im Sinne der Erfindung ist unter einer galvanischen Zelle eine Vorrichtung zu verstehen, welche auch zur Speicherung chemischer Energie und zur Abgabe elektrischer Energie dient. Dazu verfügt die erfindungsgemäße galvanische Zelle auch über einen Elektrodenstapel und einen Elektrolyt. Auch kann die galvanische Zelle ausgestaltet sein, elektrische Energie beim Laden aufzunehmen. Man spricht dann auch von einer Sekundärzelle oder einem Akkumulator.

Im Sinne der Erfindung ist unter einem Elektrodenstapel eine Einrichtung zu verstehen, welche als Baugruppe einer galvanischen Zelle auch der Speicherung chemischer Energie und zur Abgabe elektrischer Energie dient. Vor der Abgabe elektrischer Energie wird gespeicherte chemische Energie in elektrische Energie gewandelt. Während des Ladens wird die dem Elektrodenstapel bzw. der galvanischen Zelle zugeführte elektrische Energie in chemische Energie gewandelt und abgespeichert. Dazu weist der Elektrodenstapel mehrere Schichten auf, wenigstens eine Anodenschicht, eine Kathodenschicht und eine Separatorschicht. Die Schichten sind übereinander gelegt bzw. gestapelt, wobei die Separatorschicht wenigstens teilweise zwischen einer Anodenschicht und einer Kathodenschicht angeordnet ist. Vorzugsweise wiederholt sich diese Abfolge der Schichten innerhalb des Elektrodenstapels mehrfach. Bevorzugt sind einige Elektroden miteinander insbesondere elektrisch verbunden, insbesondere parallel geschaltet. Vorzugsweise sind die Schichten zu einem Elektrodenwickel aufgewickelt. Nachfolgend wird der Begriff "Elektrodenstapel" auch für Elektrodenwickel verwendet.

Im Sinne der Erfindung ist unter einer Anodenschicht bzw. einer Anode eine Einrichtung zu verstehen, welche beim Laden Elektronen und/oder positiv geladene Ionen aufnimmt, insbesondere auf Zwischengitterplätzen einlagert. Vorzugsweise ist die Anode dünnwandig ausgebildet, besonders bevorzugt beträgt die Dicke der Anode weniger als 5% ihres Außenumfangs. Vorzugsweise weist die Anode eine Metallfolie oder eine metallische Netzstruktur auf. Vorzugsweise ist die Anode im Wesentlichen rechteckig ausgebildet.

Im Sinne der Erfindung ist unter einer Kathodenschicht bzw. einer Kathode eine Einrichtung zu verstehen, welche beim Entladen bzw. während der Abgabe elektrischer Energie auch Elektronen und/oder positiv geladene Ionen aufnimmt. Vorzugsweise ist die Kathode dünnwandig ausgebildet, besonders bevorzugt beträgt die Dicke der Kathode weniger als 5% ihres Außenumfangs. Vorzugsweise weist die Kathode eine Metallfolie oder eine metallische Netzstruktur auf. Vorzugsweise entspricht die Gestalt einer Kathode im Wesentlichen der Gestalt einer Anode des Elektrodenstapels. Eine Kathode ist auch zur elektrochemischen Wechselwirkung mit einer Anode bzw. mit dem Elektrolyt vorgesehen.

Im Sinne der Erfindung ist unter einer Separatorschicht bzw. einem Separator auch eine elektrisch isolierende Einrichtung zu verstehen, welche eine Anode von einer Kathode trennt und beabstandet. Vorzugsweise ist eine Separatorschicht auf eine Anodenschicht und/oder eine Kathodenschicht aufgetragen. Die Separatorschicht bzw. der Separator nimmt auch einen Elektrolyt wenigstens teilweise auf, wobei der Elektrolyt vorzugsweise Lithium-Ionen enthält. Der Elektrolyt ist auch mit benachbarten Schichten des Elektrodenstapels elektrochemisch wirkverbunden. Vorzugsweise entspricht die Gestalt eines Separators im Wesentlichen der Gestalt einer Anode des Elektrodenstapels. Vorzugsweise erstreckt sich eine Separatorschicht bzw. ein Separator wenigstens bereichsweise über eine Begrenzungskante wenigstens einer insbesondere benachbarten Elektrode. Besonders bevorzugt erstreckt sich eine Separatorschicht bzw. ein Separator über sämtliche Begrenzungskanten insbesondere benachbarter Elektroden hinaus.

Im Sinne der Erfindung ist unter einer Einhausung eine Einrichtung zu verstehen, welche auch den Elektrodenstapel von der Umgebung trennt. Dazu umgibt die Einhausung bzw. ein Gehäuse den Elektrodenstapel im Wesentlichen vollständig mit einer Wandung. Dem steht nicht entgegen, dass verschiedene Elektrodenstapel bzw. galvanische Zellen insbesondere einer übergeordneten Batterie gesondert umhüllt bzw. versiegelt sind. Bevorzugt ist die Einhausung mit dem Elektrodenstapel wenigstens bereichsweise stoffschlüssig verbunden. Bevorzugt ist die Einhausung als Verbundfolie ausgebildet. Bevorzugt ist die Einhausung aus wenigstens zwei Körpern ausgebildet, welche um den Elektrodenstapel miteinander insbesondere stoffschlüssig verbunden sind. Die wenigstens zwei Körper sind geometrisch aneinander angepasst. Bevorzugt weist wenigstens einer der wenigstens zwei Körper wenigstens einen elektrisch leitenden Werkstoff, insbesondere ein Metall auf.

Im Sinne der Erfindung ist unter einem Verbindungsbereich ein Bereich zu verstehen, in welchem einer Schicht des Elektrodenstapels mit wenigstens einer weiteren Schicht, insbesondere einer benachbarten Schicht, lösbar verbunden ist. Bevorzugt decken sich mehrere Verbindungsbereiche wenigstens teilweise. Vorzugsweise sind benachbarte Schichten innerhalb eines Verbindungsbereichs insbesondere stoffschlüssig und/oder kraftschlüssig miteinander lösbar verbunden. Vorzugsweise ist ein lösbarer Verbindungsbereich in einem Randbereich und/oder entlang einer Begrenzungskante einer Schicht des Elektrodenstapels angeordnet. Vorzugsweise weisen benachbarte Schichten des Elektrodenstapels mehrere Verbindungsbereiche auf.

Im Sinne der Erfindung ist unter einer Verbindungseinrichtung eine Einrichtung zu verstehen, welche vorgesehen ist, wenigstens zwei benachbarte Schichten des Elektrodenstapels in einem Verbindungsbereich miteinander lösbar zu verbinden. Vorzugsweise ist verschiedenen lösbaren Verbindungsbereichen je eine Verbindungseinrichtung zugeordnet. Vorzugsweise ist mehreren lösbaren Verbindungsbereichen zweier benachbarter Schichten des Elektrodenstapels eine gemeinsame lösbare Verbindungseinrichtung zugeordnet. Vorzugsweise ist eine Verbindungseinrichtung der nachfolgenden Gruppe von Einrichtungen entnommen, welche insbesondere Klebstoffpunkte, Klebestreifen, umfasst.

Mit steigender Temperatur eines Bereichs des Elektrodenstapels einer galvanischen Zelle ist dort auch die Aktivität des Elektrolyts erhöht. So kann dieser Bereich eines Elektrodenstapels einen erhöhten elektrischen Strom abgeben oder aufnehmen. Dieser erhöhte elektrische Strom bewirkt eine erhöhte Heizleistung zumal auch der Widerstand des betroffenen elektrischen Leiters mit der Temperatur steigt. So wird die Temperaturerhöhung des betroffenen Bereichs einer galvanischen Zelle verstärkt. Diese Wechselwirkung kann zur Entzündung der galvanischen Zelle führen.

Eine erfindungsgemäße galvanische Zelle hingegen zeichnet sich dadurch aus, dass wenigstens ein lösbarer Verbindungsbereich bzw. eine lösbare Verbindungseinrichtung versagt. Erfindungsgemäß entfernen sich benachbarte Schichten des Elektrodenstapels wenigstens bereichsweise voneinander. Die elektrochemische Wechselwirkung dieser voneinander entfernten Bereiche ist verringert bzw. unterbunden. Ein weiterer Temperaturanstieg oder eine unkontrollierte Freisetzung gespeicherter Energie wird vorteilhaft verhindert. So wird die zugrunde liegende Aufgabe gelöst.

Nachfolgend werden zu bevorzugende Weiterbildungen der Erfindung beschrieben.

Vorteilhaft liegt die Einhausung überwiegend am Elektrodenstapel an. Vorzugsweise umschließt die Einhausung den Elektrodenstapel wenigstens teilweise formschlüssig, stützt den Elektrodenstapel und hält dessen einzelne Schichten zusammen. Vorzugsweise ist die Einhausung vorgespannt und zwängt die Schichten des Elektrodenstapels aneinander. Dabei wirkt die Einhausung insbesondere als lösbare Verbindungseinrichtung. Vorzugweise ist die Einhausung aus einem Werkstoff ausgebildet, welcher bei vorbestimmten Bedingungen versagt, insbesondere erweicht, reißt und/oder durchlässig wird. Vorzugsweise weist die Einhausung wenigstens eine Verbindungsnaht auf, welche bei vorbestimmten Bedingungen wenigstens teilweise versagt, insbesondere bei Überschreiten einer Temperatur und/oder eines Drucks. Nach Erweichen des Werkstoffs bzw. wenigstens teilweiser Zerstörung der Einhausung oder einer Verbindungsnaht ist die zusammenpressende Wirkung der Einhausung auf den Elektrodenstapel verringert. So lösen sich wenigstens teilweise lösbare Verbindungsbereiche und insbesondere die elektrochemische Wechselwirkung innerhalb des Elektrodenstapels wird verringert. Vorzugsweise ist die Einhausung mit wenigstens einer Dünnstelle ausgebildet, welche bei vorbestimmten Bedingungen versagt, insbesondere bei Überschreiten einer Temperatur und/oder eines Drucks. In einem Siegelbereich ist die Einhausung mit dem Elektrodenstapel bereichsweise verbunden, insbesondere stoffschlüssig. Vorzugsweise ist der Siegelbereich an die Beanspruchung aus dem Betrieb der galvanischen Zelle angepasst, insbesondere an auftretende Schubspannungen. Vorzugsweise ist der Siegelbereich teilweise verdünnt und weist eine Sollbruchstelle auf. Vorzugsweise ist dem Elektrolyt ein Additiv beigegeben, welches die Einhausung und/oder den Siegelbereich bei vorbestimmten Bedingungen erweicht bzw. die Dichtigkeit verringert. Vorzugsweise setzt der Elektrolyt bzw. das Additiv oberhalb einer vorgegebenen Temperatur eine Reaktivkomponente frei, insbesondere HF. Die Reaktivkomponente ist insbesondere vorgesehen, die Einhausung durch chemische Wirkung wenigstens teilweise zu zerstören. Vorzugsweise durchlöchert die Reaktivkomponente die Einhausung, erweicht sie und/oder macht sie durchlässig. Vorzugsweise ist die wenigstens eine Öffnungseinrichtung als ein Einleger aus einem thermisch verformbaren Material bzw. Verbundmaterial ausgebildet. Das Verbundmaterial weist vorzugsweise Bereiche unterschiedlicher Wärmedehnung auf. So ändert ein Einleger aus einem Verbundmaterial seine Gestalt abhängig von einer Temperaturänderung. Abhängig von der Gestalt des Einlegers übt dieser bevorzugt eine Kraft auf die Einhausung aus, welche insbesondere die Einhausung wenigstens teilweise zerstört. Dieser Einleger weist bevorzugt scharfkantige oder spitze Elemente auf, welche die Einhausung oberhalb einer vorgegebenen Temperatur zerstören oder durchlöchern. Vorzugsweise ist dieser Einleger aus einem Material gefertigt, welches sich bei infolge einer chemischen Reaktion mit einer Reaktivkomponente, insbesondere bei Anwesenheit eines Gases, auflöst oder verbiegt und so eine Öffnung schafft.

Vorteilhaft versagt der wenigstens eine lösbare Verbindungsbereich bzw. die wenigstens eine lösbare Verbindungseinrichtung bei vorbestimmten Bedingungen, insbesondere bei Überschreiten eines vorbestimmten Drucks und/oder einer vorbestimmten Temperatur. Bevorzugt versagt eine stoffschlüssige und/oder formschlüssige Verbindung durch Erweichen und/oder Verformen wenigstens einer der beteiligten Schichten. Bevorzugt weisen eine Hefteinrichtung oder eine Klemmeinrichtung einen Werkstoff auf, welcher bei vorbestimmten Bedingungen erweicht und/oder versagt, insbesondere oberhalb einer vorgegebenen Temperatur. Vorzugsweise weist eine Klemmeinrichtung ein Bauteil mit einem Werkstoff auf, welcher bei vorgegebenen Bedingungen, insbesondere oberhalb einer vorgegebenen Temperatur insbesondere seine Festigkeit einbüßt. Vorzugsweise ist eine Klemmeinrichtung federbelastet.

Vorteilhaft ist die lösbare Verbindungseinrichtung der Einhausung zugeordnet. Vorzugsweise ist die wenigstens eine lösbare Verbindungseinrichtung mit der Einhausung verbunden. Vorzugsweise ist die wenigstens eine lösbare Verbindungseinrichtung mit der Einhausung gelenkig verbunden. Vorzugsweise ist die wenigstens eine lösbare Verbindungseinrichtung federbelastet. Vorzugsweise ist der wenigstens eine lösbare Verbindungseinrichtung eine Öffnungseinrichtung zugeordnet. So wird der Elektrodenstapel insbesondere vor unerwünschter Verlagerung innerhalb der Einhausung bewahrt.

Vorteilhaft weist die wenigstens eine lösbare Verbindungseinrichtung wenigstens einen Polkontakt auf, welcher insbesondere zur elektrischen Kontaktierung des Elektrodenstapels dient. Vorteilhaft weist die wenigstens eine lösbare Verbindungseinrichtung wenigstens zwei voneinander elektrisch isolierte Bereiche auf, welche mit Elektroden verschiedener Polarität in Wirkverbindung stehen. Vorzugsweise weist jeder dieser Bereiche einer lösbaren Verbindungseinrichtung einen eigenen Polkontakt auch zur elektrischen Kontaktierung des Elektrodenstapels auf. Wenn sich eine lösbare Verbindungseinrichtung öffnet, so wird dabei erfindungsgemäß insbesondere die Kontaktierung des Elektrodenstapels wenigstens teilweise unterbrochen. Vorzugsweise löst sich nach Öffnen einer lösbaren Verbindungseinrichtung wenigstens ein Verbindungsbereiche und die zugehörigen Schichten entfernen sich wenigstens teilweise voneinander. Vorzugsweise ist wenigstens ein Polkontakt durch die Wandung der Einhausung geführt und ist außerhalb der Einhausung wenigstens elektrisch kontaktiert. Vorzugsweise weist eine lösbare Verbindungseinrichtung wenigstens ein Rahmenelement auf. Vorzugsweise ist dieses wenigstens eine Rahmenelement mit der Einhausung verbunden. Vorzugsweise bildet das Rahmenelement einen Teil der Wandung der Einhausung.

Vorteilhaft ist der Einhausung wenigstens eine Öffnungseinrichtung zugeordnet. Diese ist vorgesehen, die Einhausung bei vorbestimmten Bedingungen, insbesondere oberhalb einer vorgegebenen Temperatur und/oder eines vorgegebenen Drucks zu öffnen. Erfindungsgemäß verursacht das Öffnen der Einhausung bzw. einer Verbindungsnaht der Einhausung insbesondere ein Lösen wenigstens ein Verbindungsbereich. Zugehörige Schichten des Elektrodenstapels entfernen sich wenigsten bereichsweise voneinander und deren elektrochemische Wechselwirkung wird wenigstens verringert. Die Öffnungseinrichtung ist bevorzugt ausgebildet, die Einhausung ohne äußere Betätigung zu öffnen. Vorzugsweise ist die wenigstens eine Öffnungseinrichtung Teil der Einhausung. Vorzugsweise weist die wenigstens eine Öffnungseinrichtung eine spitze und/oder scharfkantige Geometrie auf. Vorzugsweise ist die Öffnungseinrichtung so angeordnet, dass sie die Wandung der Einhausung bei einer vorbestimmten Verformung durchstößt bzw. öffnet. Vorzugsweise ist die wenigstens eine Öffnungseinrichtung als Klinge oder Nadel ausgebildet, insbesondere als Hohlnadel. Vorzugsweise wird ein Fluid durch die Hohlnadel in einen dafür vorgesehenen Raum bzw. Ort innerhalb der Einhausung geleitet. Vorzugsweise ist die wenigstens eine Öffnungseinrichtung als Überdruckventil ausgebildet. Vorzugsweise ist der wenigstens einen Öffnungseinrichtung ein Aktuator zugeordnet, wobei der Aktuator von einem Mechanismus, einem Batteriemanagementsystem und/oder einer Steuerungseinrichtung betätigt wird. Vorzugsweise ist der Aktuator Teil der Öffnungseinrichtung. Vorzugsweise ist der Aktuator durch eine elektrischen Puls, mechanische, elektrische und/oder sonstige Energie getrieben. Vorzugsweise öffnet die wenigstens eine Öffnungseinrichtung die Einhausung, sobald eine Temperatur von 60° C insbesondere an der Oberfläche der Einhausung überschritten wird. Vorzugsweise ist die Öffnungseinrichtung so angeordnet, dass eine nach Öffnung der Einhausung entweichende Substanz der Kühlanlage des Fahrzeugs und/oder einem dafür vorgesehenen Raum, insbesondere einer Kondenspatrone zugeführt wird. Vorzugsweise ist die Kondenspatrone im Rahmen von Wartungsarbeiten austauschbar. Vorzugsweise weist die Einhausung mehrere Öffnungseinrichtungen auf, welche die Einhausung bei verschiedenen Bedingungen öffnen. So können mit steigendem Druck und/oder Temperatur weitere Öffnungseinrichtungen zusätzliche Öffnungen der Einhausung erzeugen. Vorzugsweise ist die Einhausung mit einer Sollbruchstelle versehen, welche insbesondere im Siegelbereich angeordnet ist. Vorzugsweise ist die Einhausung bzw. der Siegelbereich im Bereich der Sollbruchstelle verdünnt. Vorzugsweise ist der Siegelbereich zur Einstellung einer bestimmten Bruchlast mit elektromagnetischer Strahlung behandelt, thermisch und/oder mechanisch geschwächt, insbesondere nach seiner Erzeugung. Vorzugsweise wird wenigstens ein weiteres Material zwischen Einhausung und Elektrodenstapel vor Erzeugung des Siegelbereichs eingelegt oder außen auf dem erzeugten Siegelbereich befestigt. Dieses weitere Material ist vorgesehen, bei vorbestimmten Bedingungen von einer Chemikalie insbesondere aus dem Inneren der Einhausung geschwächt zu werden und/oder seine Geometrie zu ändern. Diese Chemikalie ist bevorzugt dem Elektrodenstapel beigegeben. Vorzugsweise wird eine Chemikalie dem Innenraum der Einhausung bzw. deren Wandung bei vorbestimmten Bedingungen mit einer Injektionsnadel zugeführt. Diese Chemikalie ist vorgesehen, das Material der Einhausung zu schwächen. Vorzugsweise ist eine Öffnungseinrichtung mit der Klimaanlage des Fahrzeugs verbunden, wobei aus der Einhausung entweichende Substanz von der Kühlanlage, insbesondere dem Kältemittel der Klimaanlage aufgenommen wird. Vorzugsweise wird aus der Einhausung entweichende Substanz einem Raum geführt. Vorzugsweise wird die aus der Einhausung entweichende Substanz in dem Raum gekühlt bzw. kondensiert. Vorzugsweise erfolgt die Kühlung mit Hilfe eines Wärmerohrs. Vorzugsweise ist der Raum zur Aufnahme einer aus der Einhausung entweichenden Substanz als Kondenspatrone ausgebildet. Vorzugsweise wird die Kondenspatrone im Rahmen von Wartungsarbeiten gewechselt. Vorzugsweise sind mehrere Öffnungseinrichtungen mit einer gemeinsamen Kondenspatrone verbunden. Vorzugsweise ist eine Öffnungseinrichtung als Drehverschluss oder Schraubverschluss ausgebildet. Vorzugsweise ist eine Öffnungseinrichtung so ausgebildet, dass ein Stopfen mit definierten Kraft aus einem Stutzen gepresst wird, wobei der Stutzen Teil der Einhausung ist. Vorzugsweise ist eine Öffnungseinrichtung als Schwachstelle der Einhausung ausgebildet, welche eine linienförmige Dünnstelle bzw. Kerbe aufweist. Vorzugsweise ist die Dünnstelle in die Einhausung geprägt, insbesondere in den Siegelbereich. Vorzugsweise weist die Öffnungseinrichtung einen federbelasteten Hebel auf.

Vorteilhaft ist der wenigstens eine lösbare Verbindungsbereich langgestreckt entlang wenigstens einer Begrenzungskante des Elektrodenstapels ausgebildet. Vorzugsweise ist der wenigstens eine lösbare Verbindungsbereich langgestreckt entlang einer Begrenzungskante des Elektrodenstapels ausgebildet. Vorzugsweise ist der Elektrodenstapel im Wesentlichen quaderförmig ausgebildet und weist vier Kanten auf, die im Wesentlichen parallel zueinander verlaufen und länger als die übrigen Begrenzungskanten des Quaders sind. Vorzugsweise verläuft der wenigstens eine Verbindungsbereich entlang wenigstens einer solchen längeren Begrenzungskante. Vorzugsweise ist wenigstens eine lösbare Verbindungseinrichtung so in Bezug auf den Elektrodenstapel angeordnet, dass die Verbindungseinrichtung den wenigstens einen länglichen Verbindungsbereich erzeugt und im Wesentlichen abdeckt. Vorzugsweise weist die galvanische Zelle wenigstens zwei lösbare Verbindungseinrichtungen auf, welche entlang zwei gegenüberliegenden Begrenzungskanten des Elektrodenstapels angeordnet sind. Der Elektrodenstapel weist dann wenigstens zwei längliche, lösbare Verbindungsbereiche auf. Vorzugsweise ist die wenigstens eine lösbare Verbindungseinrichtung mit der Einhausung der galvanischen Zelle verbunden. Vorzugsweise gibt die wenigstens eine lösbare Verbindungseinrichtung bei vorgegebenen Bedingungen den Elektrodenstapel frei bzw. lässt ein Lösen des wenigstens einen Verbindungsbereichs zu.

Vorteilhaft ist der galvanischen Zelle wenigstens eine Messeinrichtung zugeordnet, insbesondere zur Erfassung der Temperatur und/oder eines Drucks der galvanischen Zelle. Die Messeinrichtung stellt wenigstens zeitweise ein Signal zur Verfügung, welches auch zur Verarbeitung von einer nicht der galvanischen Zelle zugehörigen Steuereinrichtung bestimmt ist. Vorzugsweise weist die galvanische Zelle wenigstens eine Kühleinrichtung auf, welche der galvanischen Zelle bei vorbestimmten Bedingungen Wärmeenergie zuführt oder aber entzieht. Vorzugsweise ist die wenigstens eine Kühleinrichtung schaltbar. Vorzugsweise findet für einen Schaltvorgang der wenigstens einen Kühleinrichtung ein Signal der wenigstens einen Messeinrichtung Berücksichtigung.

Vorteilhaft weist die galvanische Zelle wenigstens ein Mittel zur Lösung eines lösbaren Verbindungsbereich bzw. einer lösbaren Verbindungseinrichtung auf. Vorzugsweise wird solch ein Mittel bei vorbestimmten Bedingungen betätigt, insbesondere bei Überschreiten einer vorgegebenen Temperatur und/oder eines vorgegebenen Drucks. Dabei ist das Mittel der nachfolgenden Gruppe von Mitteln entnommen, welche insbesondere Hebel, Keile, Schrauben, Formstücke mit definierter Bruchlast bzw. definierten Bedingungen für deren Erweichung umfasst.
Vorzugsweise sind diese Mittel bzw. Formstücke so mit den lösbaren Verbindungsbereichen bzw. lösbaren Verbindungseinrichtungen wirkverbunden, dass bei vorgegebenen Bedingungen wenigstens ein lösbarer Verbindungsbereich gelöst wird.

Erfindungsgemäß wird vorzugsweise ein Separator verwendet, welcher aus einem stoffdurchlässigen Träger besteht, vorzugsweise teilweise stoffdurchlässig, also im Wesentlichen durchlässig in Bezug auf zumindest ein Material und im Wesentlichen undurchlässig in Bezug auf zumindest ein anderes Material. Der Träger ist auf mindestens einer Seite mit einem anorganischen Material beschichtet. Als stoffdurchlässiger Träger wird vorzugsweise ein organisches Material verwendet, welches vorzugsweise als nicht verwebtes Vlies ausgestaltet ist. Das organische Material, vorzugsweise ein Polymer und besonders bevorzugt Polyethylenterephthalat (PET), ist mit einem anorganischen ionenleitenden Material beschichtet, welches vorzugsweise in einem Temperaturbereich von -40° C bis 200° C ionenleitend ist. Das anorganische, ionenleitende Material umfasst bevorzugt wenigstens eine Verbindung aus der Gruppe der Oxide, Phosphate, Sulfate, Titanate, Silikate, Aluminosolikate mit wenigstens einem der Elemente Zr, Al, Li, besonders bevorzugt Zirkonoxid. Bevorzugt weist das anorganische, ionenleitende Material Partikel mit einem größten Durchmesser unter 100 nm auf. Ein solcher Separator wird beispielsweise unter dem Handelsnamen "Separion" von der Evonik AG in Deutschland vertrieben.

Vorteilhaft wird eine galvanische Zelle, deren Elektroden und Separatoren in wenigstens einem lösbaren Verbindungsbereich lösbar miteinander verbunden sind, so betrieben, dass bei Überschreiten einer vorbestimmten Bedingung, insbesondere bei Überschreiten einer Temperatur und/oder eines Drucks, der wenigstens eine lösbare Verbindungsbereich gelöst wird. Vorzugsweise wird ein Mittel zum Lösen des wenigstens einen lösbaren Verbindungsbereichs eingesetzt. Nach Lösen des wenigstens einen Verbindungsbereichs entfernen sich wenigstens zwei Schichten des Elektrodenstapels wenigstens teilweise voneinander. So wird die elektrochemische Wechselwirkung zwischen diesen beiden Schichten verringert. Nach Lösen einer Verbindungseinrichtung entfernen sich wenigstens zwei Schichten des Elektrodenstapels wenigstens teilweise voneinander und/oder wird die Kontaktierung des Elektrodenstapels unterbrochen.

Vorteilhaft wird eine galvanische Zelle mit einer Einhausung und wenigstens einer Öffnungseinrichtung so betrieben, dass die wenigstens eine Öffnungseinrichtung die Einhausung bei vorbestimmten Bedingungen öffnet, insbesondere bei Überschreiten eines vorbestimmten Drucks und/oder einer vorbestimmten Temperatur. Vorzugsweise wird dabei ein Mittel zur Betätigung der wenigstens einen Öffnungseinrichtung verwendet.

Vorteilhaft wird eine erfindungsgemäße galvanische Zelle zur Versorgung eines Antriebs eines Kraftfahrzeugs mit einem Elektroantrieb oder einem Hybridantrieb verwendet.

Weitere Vorteile, Merkmale und Anwendungsmöglichkeiten der vorliegenden Erfindung ergeben sich aus der nachfolgenden beispielhaften Beschreibung in Zusammenhang mit den Figuren. Es zeigt:
- Fig. 1: den Elektrodenstapel einer erfindungsgemäßen galvanischen Zelle,
- Fig. 2: eine galvanishce Zelle mit lösbaren Verbindungsbereichen und mit einem Siegelbereich,
- Fig. 3: den Elektrodenstapel einer weiteren Ausführungsform einer erfindungsgemäßen galvanischen Zelle mit einem lösbaren Verbindungsbereich,
- Fig. 4: den Elektrodenstapel einer weiteren Ausführungsform einer erfindungsgemäßen galvanischen Zelle mit mehren lösbaren Verbindungsbereichen,
- Fig. 5: den Elektrodenstapel einer weiteren Ausführungsform einer erfindungsgemäßen galvanischen Zelle mit zwei lösbaren Verbindungseinrichtungen,
- Fig. 6: den Elektrodenstapel einer weiteren Ausführungsform einer erfindungsgemäßen galvanischen Zelle mit verschiedenen lösbaren Verbindungseinrichtungen,
- Fig. 7: den Elektrodenstapel einer weiteren Ausführungsform einer erfindungsgemäßen galvanischen Zelle mit einer lösbaren Verbindungseinrichtung mit Polkontakten,
- Fig. 8: den Elektrodenstapel einer weiteren Ausführungsform einer erfindungsgemäßen galvanischen Zelle mit zwei lösbaren Verbindungseinrichtungen und einem Rahmenelement,
- Fig. 9: eine weitere Ausführungsform einer galvanischen Zelle, und

Fig. 10 einen Einleger für eine galvanische Zelle. Nachfolgend sind gleiche oder gleichwirkende Komponenten bzw. Elemente einheitlich mit denselben Bezugszeichen bezeichnet.

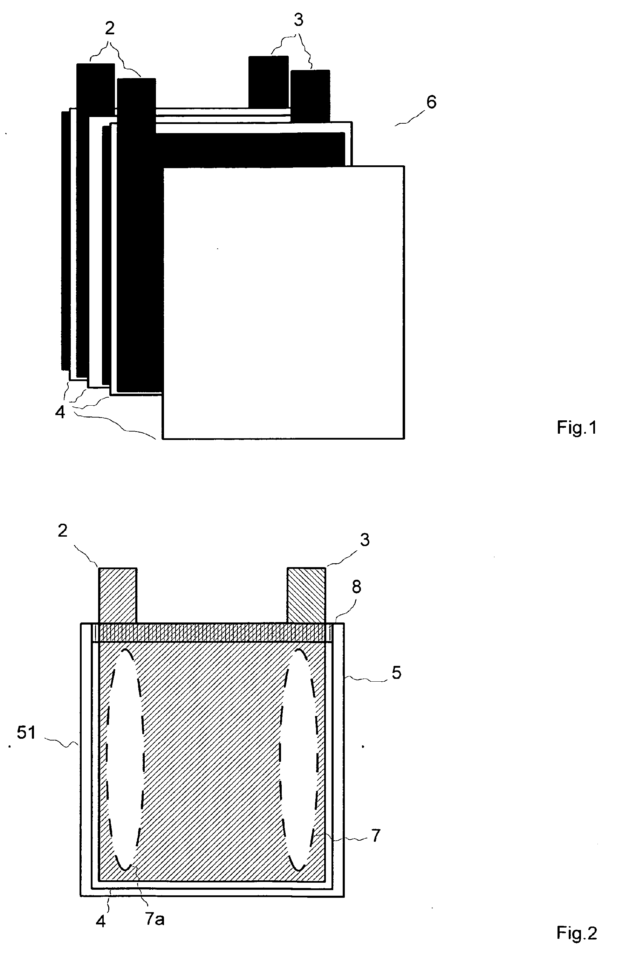

Fig.1 zeigt einen aufgefächerten Elektrodenstapel 6, welcher mehrere Anodenschichten 2, mehrere Kathodenschichten 3 und mehrere Separatorschichten 4.

Die Separatorschichten 4 sind so bemessen, dass sie die Elektrodenschichten 2, 3 umlaufend überragen. Diese Separatorschicht 4 ist mit einer ionischen Flüssigkeit benetzt. Nicht dargestellt ist, dass die Elektrodenschichten gleicher Polarität miteinander elektrisch leitend verbunden sind.

Fig. 2 zeigt eine galvanische Zelle 1 mit einem Elektrodenstapel in einer Einhausung 5. Der Elektrodenstapel weist eine Anode 2, eine Kathode 3, einen Separator 4 auf. Die verschiedenen Schichten sind in den Verbindungsbereichen 7, 7a (gestrichelt) verbunden. Die Einhausung 5 ist mit dem Elektrodenstapel in einem Siegelbereich 8 stoffschlüssig verbunden. Die Einhausung 5 weist eine Verbindungsnaht 51 auf, welche ausgebildet ist, bei vorbestimmten Bedingungen zu versagen. Vor der Erzeugung des Siegelbereichs 8 wird innerhalb der Einhausung 5 ein Unterdruck erzeugt. So liegt die Einhausung 5 eng am Elektrodenstapel an und zwängt diesen zusammen. Mit Versagen der Verbindungsnaht 51 wird die zusammenpressende Wirkung der Einhausung 5 auf den Elektrodenstapel verringert. Anschließend löst sich der Verbindungsbereich 7a und die zugehörigen Schichten des Elektrodenstapels entfernen sich wenigstens teilweise voneinander. So wird deren elektrochemische Wechselwirkung wenigstens teilweise unterbrochen.

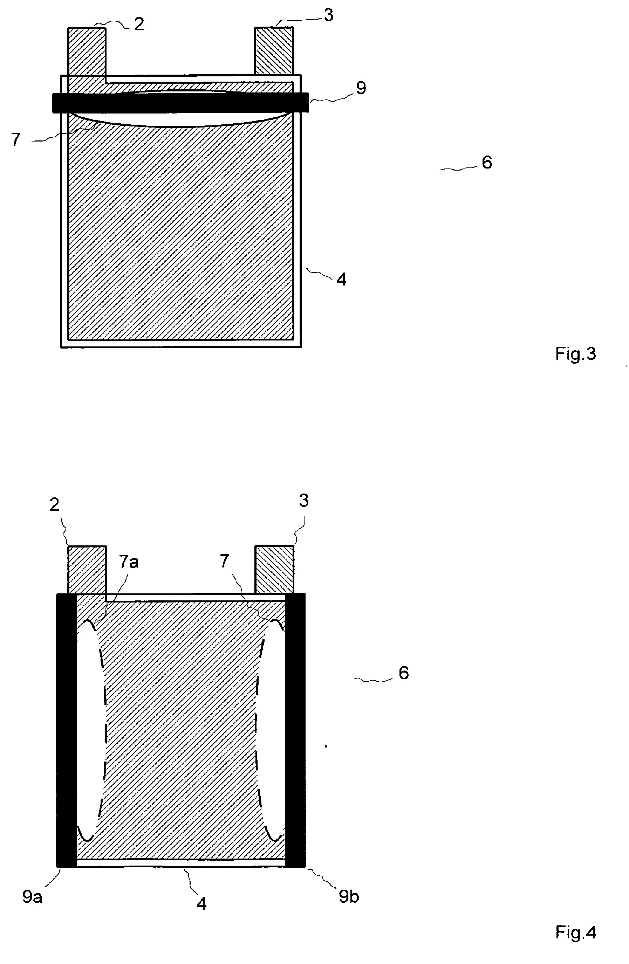

Fig. 3 zeigt einen Elektrodenstapel 6 mit zwei Elektrodenschichten 2, 3 und einer Separatorschicht 4. Diese Schichten sind mit dem lösbaren Verbindungsbereich 7 verbunden. Der Verbindungsbereich 7 wird durch den umlaufenden Gewebegurt 9 erzeugt, wobei der Gewerbegurt 9 oberhalb einer vorgegebenen Temperatur erweicht und insbesondere merklich dehnt. Anschließend löst sich der Verbindungsbereich 7 und die zugehörigen Schichten des Elektrodenstapels entfernen sich wenigstens teilweise voneinander. So wird deren elektrochemische Wechselwirkung wenigstens teilweise unterbrochen.

Fig. 4 zeigt einen Elektrodenstapel 6 mit zwei Elektrodenschichten 2, 3 und einer Separatorschicht 4. Diese Schichten sind in den lösbaren Verbindungsbereichen 7, 7a durch die Klemmschienen 9a, 9b verbunden. Die Klemmschienen 9a, 9b sind federbelastet, wobei die Federn nicht dargestellt sind. Die Federn sind so ausgebildet, dass deren Federkonstanten mit steigender Temperatur nacheinander abfallen. So werden mit steigender Temperatur die Klemmschienen 9a, 9b immer nachgiebiger, die Verbindungsbereiche 7, 7a lösen sich zunehmend und die zugehörigen Schichten des Elektrodenstapels entfernen sich wenigstens bereichsweise voneinander. Die elektrochemische Wechselwirkung der Schichten wird so verringert bzw. unterbunden.

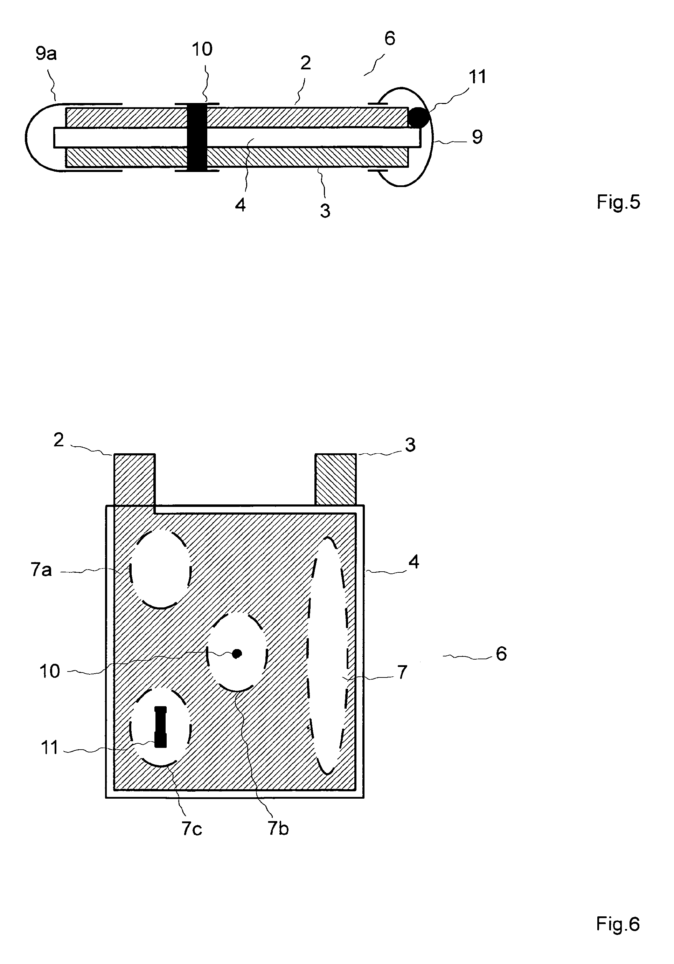

Fig. 5 zeigt den Elektrodenstapel 6 in einer Seitenansicht. Anode 2 und Kathode 3 umschließen den Separator 4, welcher sich über die Flächen der Elektroden 2, 3 hinaus erstreckt. In mehreren Verbindungsbereichen (nicht markiert) sind die Schienen mittels Verbindungseinrichtungen 9, 9a, 10 verbunden. Weiter ist dem Elektrodenstapel 6 eine Kühleinrichtung 11 zur Abfuhr von Wärme zugeordnet, welche den Elektrodenstapel 6 wärmeleitend berührt. Die Kühleinrichtung kann bereichsweise Geometrien zur Vergrößerung der Oberfläche aufweisen. Mit zunehmender Temperatur erweichen die Klemmeinrichtungen 9, 9a, wodurch sich die Verbindungsbereiche lösen. Die elektrisch nicht leitende Hefteinrichtung 10 ist an einem Ende mit einer Schwachstelle ausgebildet. Dem Elektrolyt ist ein Additiv zugegeben. Oberhalb einer vorgegebenen Temperatur wirkt das Additiv schädigend auf den Werkstoff der Hefteinrichtung 10. Deren Schwachstelle versagt bevorzugt und löst den zugehörigen Verbindungsbereich. Alternativ ist die Klemmeinrichtung 9, 9a aus einem Verbundmaterial ausgebildet, welches Bereiche unterschiedlicher Wärmedehnungskoeffizienten aufweist, beispielsweise ein Bimetall.

Fig. 6 zeigt einen Elektrodenstapel 6 mit zwei Elektrodenschichten 2, 3 und einer Separatorschicht 4. Diese sind in den lösbaren Verbindungsbereichen 7, 7a, 7b, 7c miteinander verbunden. Die lösbaren Verbindungsbereiche 7, 7a sind mit einem Klebstoff ausgebildet, welcher oberhalb einer vorgegebenen Temperatur versagt. Der elektrisch nicht leitende Verbindungsniet 10 versagt oberhalb einer vorgegebenen Temperatur. Die ebenfalls elektrisch nicht leitende Heftklammer 11 versagt infolge der schädigenden Einwirkung eines Additivs des Elektrolyts, welches oberhalb einer vorgegebenen Temperatur frei wird. Ein Heftfaden wird insbesondere infolge Wärmeeinwirkung brüchig bzw. bricht. Ein nicht dargestellter Aktivator übt eine Kraft auf den Elektrodenstapel aus, so dass ein Band oder Heftfaden reißt.

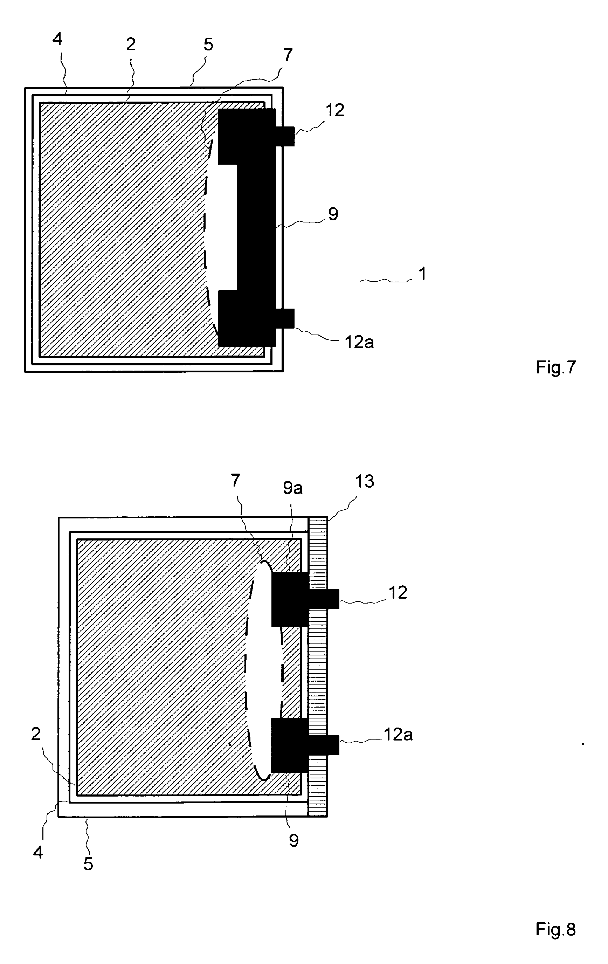

Fig. 7 und Fig. 8 zeigen eine galvanische Zelle 1, deren Elektrodenstapel von einer Einhausung 5 umgeben ist. Die Schichten 2, 4 des Elektrodenstapels sind in einen Verbindungsbereich 7 lösbar verbunden. Die Klemmeinrichtungen 9, 9a verbinden die Schichten des Elektrodenstapels. Die Schenkel der Klemmeinrichtung 9, 9a sind voneinander elektrisch isoliert und weisen je einen Polkontakt 12, 12a auf. Die Schenkel der Klemmeinrichtungen 9, 9a kontaktieren den Elektrodenstapel. Die Polkontakte 12, 12a ragen aus der Einhausung 5 heraus. An den Polkontakten 12, 12a ist je eine Abdichtung vorgesehen. Die nicht dargestellten Federn der Klemmeinrichtung 9 sind so ausgebildet, dass deren Federkonstanten mit steigender Temperatur zunehmend erweichen. So sinkt die Kraft, welche die Klemmeinrichtungen 9, 9a auf den Elektrodenstapel ausüben, mit steigender Temperatur. Ersatzweise sind die Federn aus einem Werkstoff ausgebildet, welcher von einem Additiv des Elektrolyts oberhalb einer vorbestimmten Temperatur zunehmend geschwächt wird. Nach Öffnen bzw. Versagen einer Klemmeinrichtung 9, 9a ist die Kontaktierung des Elektrodenstapels unterbrochen. Es ist nicht dargestellt, dass eine Klemmeinrichtung zum Lösen insbesondere einen Hebel aufweist. Dieser Hebel wird insbesondere von einem Aktivator betätigt werden. Nicht dargestellt ist, dass die Klemmeinrichtung insbesondere mittels eines federbelasteten Kniehebels geschlossen ist. Der federbelastete Kniehebel ist vorgesehen, insbesondere oberhalb einer vorgegebenen Temperatur und/oder eines vorgegebenen Drucks zu öffnen.

Fig. 8 zeigt eine galvanische Zelle mit mehreren federbelasteten Klemmeinrichtungen 9, 9a. Diese sind mit einem Rahmenelement 13 insbesondere stoffschlüssig verbunden. Es ist nicht dargestellt, dass eine Klemmeinrichtung 9, 9a drehbeweglich mit dem Rahmenelement 13 verbunden ist und dass sich eine Scjließfeder am Rahmenelement 13 abstützt. Das Rahmenelement 13 ist Teil der Einhausung 5 und mit dieser insbesondere stoffschlüssig verbunden. Eine federbelastete Klemmeinrichtung gleicht insbesondere thermisch verursachte Dickenänderungen aus. Eine Kraft, welche auf den Elektrodenstapel insbesondere von einem Aktivator ausgeübt wird, führt zur Verlagerung des Stapels aus der Klemmeinrichtung. Dadurch wird insbesondere die Kontaktierung des Elektrodenstapels unterbrochen.

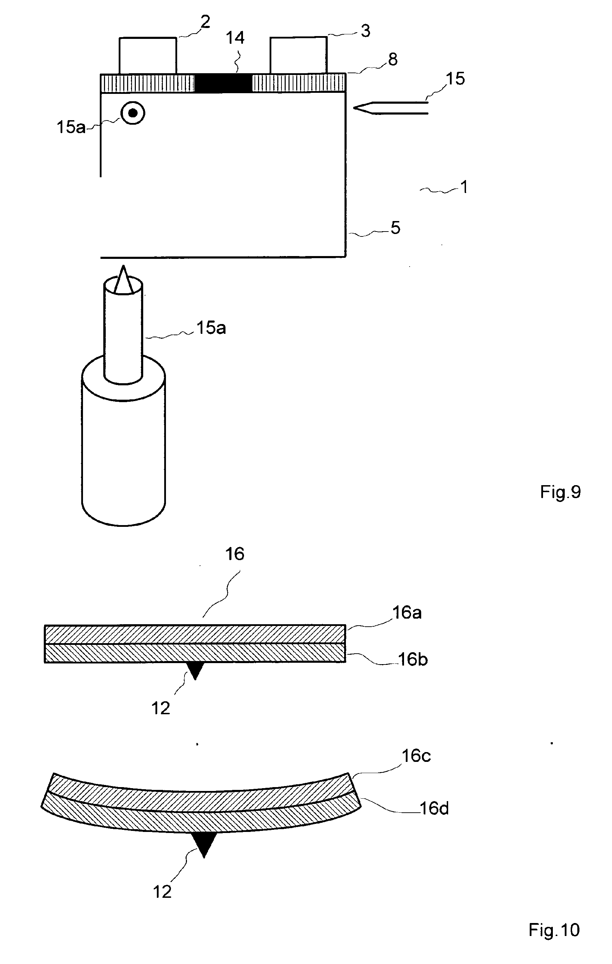

Fig. 9 zeigt eine galvanische Zelle 1 mit Anode 2, Kathode 3, der Einhausung 5 und einem Siegelbereich 8. Der Siegelbereich 8 weist einen Bereich auf, der als Dünnstelle 14 ausgebildet ist. Bei einem vorgegebenen Druck versagt die Dünnstelle 14 und insbesondere der in der Einhausung 5 vorliegende Überdruck wird abgebaut. Weiter ist die galvanische Zelle 1 mit verschiedenen Öffnungseinrichtungen 15, 15a, 15b ausgestattet, welche vorgesehen sind, die Einhausung 5 bei vorbestimmten Bedingungen zu öffnen. Das Überdruckventil 15a ermöglicht nach Öffnen einen Abbau des Druckunterschieds zwischen dem Innendruck der Zelle und der Umgebung. Vorzugsweise weist die Einhausung 5 mehrere Sicherheitsventile 15a auf, welche bei unterschiedlichen Druckunterschieden öffnen. Der Klingenabschnitt 15 ist in einem gewissen Abstand zur Einhausung angeordnet. Wenn sich die Einhausung 5 aufbläht, erreicht ein Bereich der Einhausung 5 den Klingenabschnitt 15. Dieser öffnet die Einhausung 5. Bevorzugt sind mehrere Klingenabschnitte 15 an verschiedenen Stelle und/oder mit verschiedenen Abständen von der Einhausung 5 angeordnet. Eine Öffnungseinrichtung 15 kann auch als Spitze ausgebildet sein. Eine Nadel 15b ist in einem Abstand zur Einhausung 5 angeordnet. Die aufgeblähte Einhausung 5 nimmt Kontakt zur Nadel 15b auf, welche die Einhausung 5 öffnet. Die Nadel 15b ist von einem Schlauchstück umgeben, welches austretende Gase zu einer Kondenspatrone führt. Dort wird der Elektrolyt gesammelt und ggf. verflüssigt. Die Kondenspatrone kann im Rahmen von Wartungsarbeiten gewechselt werden. Vorzugsweise sind mehrere Schlauchstücke bzw. Öffnungseinrichtungen mit derselben Kondenspatrone verbunden. Es ist nicht dargestellt, dass die Einhausung neben dem Elektrodenstapel auch einen Einleger aufnimmt. Der Einleger ist vorgesehen, wenigstens zeitweise eine Kraft auf die Einhausung auszuüben. Bei vorbestimmten Bedingungen wird die von dem Einleger auf die Einhausung ausgeübte Kraft so groß, dass die Einhausung versagt. Dadurch löst sich wenigstens ein Verbindungsbereich und zugehörige Schichten des Elektrodenstapels entfernen sich wenigstens bereichsweise voneinander.

Fig. 10 zeigt eine Öffnungseinrichtung, welche als Einleger 16 ausgebildet ist. Der Einleger 15 ist aus einem Verbundmaterial gefertigt, welches Bereiche 16a, 16b mit unterschiedlichen Wärmedehnungskoeffizienten aufweist. Weiter weist der Einleger 16 einen Dorn 17 auf. Temperaturabhängig ändert der Einleger 16c, 16d seine Geometrie und übt insbesondere eine Kraft auf die nicht dargestellte Einhausung aus. Die Einhausung versagt erfindungsgemäß an insbesondere einer Perforation, einer Schwachstelle bzw. Verbindungsnaht und/oder wird von einem Dorn durchstoßen.

Die oben beschriebenen Möglichkeiten zur Unterbrechung der internen elektrischen Kontaktierung einer Elektrodenstapel lassen sich bevorzugt mit einem manuellen oder automatischen Batterie-Notschalter kombinieren.

Die oben beschriebenen Möglichkeiten zur Heftung und Klemmung einer Elektrodenstapel an einen Rahmen lassen sich im Sinne der Erfindung auch miteinander kombinieren. Die erfindungsgemäße Klemmung und/oder Heftung einer Elektrodenstapel an einen Rahmen kann sich auch auf mehrere Elektrodenstapeln erstrecken, die zugleich geheftet und/oder geklemmt werden. Ebenso können auch nur einzelne Separatoren, Elektroden oder deren Ableiter geklemmt und/oder geheftet werden.

In Abwandlung zu den oben erläuterten Ausführungsformen kann die Erfindung auch bei Wickelzellen umgesetzt werden.

## Patentansprüche

1. Galvanische Zelle (1), mit einem im Wesentlichen prismatischen Elektrodenstapel (6), einem Elektrolyt und einer Einhausung (5), welche vorgesehen ist, den Elektrodenstapel (6) wenigstens teilweise zu umschließen,
wobei der Elektrodenstapel (6) mehrschichtig ausgebildet ist und wenigstens eine Anodenschicht (2), eine Kathodenschicht (3) und eine Separatorschicht (4) aufweist, wobei die wenigstens eine Separatorschicht (4) wenigstens teilweise zwischen einer Anodenschicht (2) und einer Kathodenschicht (3) angeordnet ist, und wobei die wenigstens eine Separatorschicht (4) den Elektrolyt wenigstens teilweise aufnimmt,
**dadurch gekennzeichnet, dass**
die wenigstens eine Anodenschicht (2), die wenigstens eine Kathodenschicht (3) und die wenigstens eine Separatorschicht (4) in wenigstens einem Verbindungsbereich (7, 7a) mittels wenigstens einer lösbaren Verbindungseinrichtung (9, 9a, 9b, 10, 11), welche ausgewählt ist aus Hefteinrichtungen, Heftklammern, Heftfaden, Klemmeinrichtungen, Klemmen, Bändern und umlaufenden Gurten, lösbar miteinander verbunden sind, wobei eine Verbindungswirkung der wenigstens einen lösbaren Verbindungseinrichtung (9, 9a, 9b, 10, 11) oberhalb einer vorgegebenen Temperatur abnimmt, sodass sich benachbarte Schichten des Elektrodenstapels (6) oberhalb der vorgegebenen Temperatur wenigstens bereichsweise voneinander entfernen.

2. Galvanische Zelle (1) nach Anspruch 1, **dadurch gekennzeichnet, dass** ein Material der wenigstens einen lösbaren Verbindungseinrichtung oberhalb der vorgegebenen Temperatur erweicht oder eine Federkonstante der wenigstens einen lösbaren Verbindungseinrichtung oberhalb der vorgegebenen Temperatur abfällt.

3. Galvanische Zelle (1) nach Anspruch 1, **dadurch gekennzeichnet, dass** wenn die Verbindungseinrichtung die Hefteinrichtung (10) oder die Heftklammer (11) oder die Klemmeinrichtung (9, 9a) ist, dem Elektrolyt ein Additiv zugegeben ist, welches oberhalb der vorgegebenen Temperatur schädigend auf die Hefteinrichtung (10) oder die Heftklammer (11) oder die Klemmeinrichtung (9, 9a) wirkt.

4. Galvanische Zelle (1) nach mindestens einem der vorhergehenden Ansprüche, **dadurch gekennzeichnet, dass**
der Elektrodenstapel (6) wenigstens eine Begrenzungskante aufweist und der Elektrodenstapel (6) mittels der lösbaren Verbindungseinrichtung (9, 9a, 9b) wenigstens teilweise entlang der Begrenzungskante lösbar verbunden ist.

5. Galvanische Zelle (1) nach mindestens einem der vorhergehenden Ansprüche, **dadurch gekennzeichnet, dass**
die wenigstens eine lösbare Verbindungseinrichtung (9, 9a, 9b) wenigstens einen Polkontakt (12, 12a) und/oder ein Rahmenelement (13) aufweist, wobei das Rahmenelement (13) den Elektrodenstapel (5) wenigstens teilweise umgibt.

6. Galvanische Zelle (1) nach mindestens einem der vorhergehenden Ansprüche, **dadurch gekennzeichnet, dass**
der Einhausung (5) wenigstens eine Öffnungseinrichtung (15, 15a, 15b) zugeordnet ist, welche vorgesehen ist, die Einhausung (5) bei vorbestimmten Bedingungen zu öffnen.

7. Galvanische Zelle (1) nach mindestens einem der vorhergehenden Ansprüche, **dadurch gekennzeichnet, dass**
die Einhausung (5) wenigstens bereichsweise am Elektrodenstapel (6) anliegt,
die Einhausung (5) insbesondere in einem Siegelbereich (8) insbesondere stoffschlüssig mit dem Elektrodenstapel (6) verbunden ist, und/oder
die Einhausung (5) wenigstens eine Dünnstelle (14) aufweist.

8. Galvanische Zelle (1) nach mindestens einem der vorhergehenden Ansprüche, **dadurch gekennzeichnet, dass**
der galvanischen Zelle (1) wenigstens eine Messeinrichtung (16) und/oder wenigstens eine Kühleinrichtung (11) zugeordnet ist.

9. Galvanische Zelle (1) nach mindestens einem der vorhergehenden Ansprüche, **dadurch gekennzeichnet, dass**
die Separatorschicht (4) mit einem Vlies aus elektrisch nicht leitfähigen Fasern ausgebildet ist, wobei das Vlies auf mindestens einer Seite mit einem anorganischen Material beschichtet ist.

10. Galvanische Zelle (1) nach mindestens einem der vorhergehenden Ansprüche, **dadurch gekennzeichnet, dass**
der wenigstens eine Separator aus einem stoffdurchlässigen Träger besteht, vorzugsweise teilweise stoffdurchlässig, also im Wesentlichen durchlässig in Bezug auf zumindest ein Material und im Wesentlichen undurchlässig in Bezug auf zumindest ein anderes Material, wobei der Träger auf mindestens einer Seite mit einem anorganischen Material beschichtet ist,
wobei als stoffdurchlässiger Träger vorzugsweise ein organisches Material verwendet wird, welches vorzugsweise als nicht verwebtes Vlies ausgestaltet ist,
wobei das organische Material vorzugsweise ein Polymer und besonders bevorzugt Polyethylenterephthalat (PET) aufweist,
wobei das organische Material mit einem anorganischen ionenleitenden Material beschichtet ist, welches vorzugsweise in einem Temperaturbereich von -40°C bis 200°C ionenleitend ist,
wobei das anorganische, ionenleitende Material bevorzugt wenigstens eine Verbindung aus der Gruppe der Oxide, Phosphate, Sulfate, Titanate, Silikate, Aluminosolikate wenigstens eines der Elemente Zr, Al, Li ist, insbesondere Zirkonoxid, und
wobei das anorganische, ionenleitende Material bevorzugt Partikel mit einem größten Durchmesser unter 100 nm aufweist.

## Claims

1. Galvanic cell (1) comprising a substantially prismatic electrode stack (6), an electrolyte and a housing (5) provided for at least partially enclosing the electrode stack (6),
wherein the electrode stack (6) is designed in multiple layers, having at least one anode layer (2), one cathode layer (3) and one separator layer (4), wherein the at least one separator layer (4) is at least partially located between an anode layer (2) and a cathode layer (3), and wherein the at least one separator layer (4) at least partially absorbs the electrolyte,
**characterised in that**
the at least one anode layer (2), the at least one cathode layer (3) and the at least one separator layer (4) are releasably connected to one another in at least one connecting region (7, 7a) by means of at least one releasable connecting device (9, 9a, 9b, 10, 11) selected from retaining devices, retaining clips, tacking threads, clamping devices, clips, tapes and continuous belts, wherein a connecting action of the at least one releasable connecting device (9, 9a, 9b, 10, 11) is reduced above a preset temperature, so that adjacent layers of the electrode stack (6) at least partially separate from one another above the preset temperature.

2. Galvanic cell (1) according to claim 1, **characterised in that** a material of the at least one releasable connecting device (9, 9a, 9b, 10, 11) softens above the preset temperature, or **in that** a spring constant of the at least one releasable connecting device drops above the preset temperature.

3. Galvanic cell (1) according to claim 1, **characterised in that**,
if the connecting device is the retaining device (10) or the retaining clip (11) or the clamping device (9, 9a), an additive with a damaging effect on the retaining device (10) or the retaining clip (11) or the clamping device (9, 9a) above the preset temperature has to be added to the electrolyte.

4. Galvanic cell (1) according to one or more of the preceding claims, **characterised in that**
the electrode stack (6) has at least one boundary edge, and **in that** the electrode stack (6) is at least partially releasably connected along the boundary edge by means of the releasable connecting device (9, 9a, 9b).

5. Galvanic cell (1) according to one or more of the preceding claims, **characterised in that**
the at least one releasable connecting device (9, 9a, 9b) comprises at least one pole contact (12, 12a) and/or a frame element (13), the frame element (13) at least partially surrounding the electrode stack (6).

6. Galvanic cell (1) according to one or more of the preceding claims, **characterised in that**
at least one opening device (15, 15a, 15b), which is provided for opening the housing (5) in predetermined conditions, is assigned to the housing (5).

7. Galvanic cell (1) according to one or more of the preceding claims, **characterised in that**
the housing (5) is in contact with the electrode stack (6) at least in some areas,
the housing (5) is joined to the electrode stack (6) by adhesive force, in particular in a sealing region (8), and/or
the housing (5) has at least one thin area (14).

8. Galvanic cell (1) according to one or more of the preceding claims, **characterised in that**
at least one measuring device (16) and/or at least one cooling device (11) is/are assigned to the galvanic cell (1).

9. Galvanic cell (1) according to one or more of the preceding claims, **characterised in that**
the separator layer (4) is formed with a fleece of fibres which are not electrically conductive, the fleece being coated with an inorganic material on at least one side.

10. Galvanic cell (1) according to one or more of the preceding claims, **characterised in that**
the at least one separator consists of a material-permeable substrate which is preferably partially material-permeable, i.e. substantially permeable to at least one material and substantially impermeable to at least one other material,
wherein the substrate is coated with an inorganic material on at least one side,
wherein an organic material which is preferably designed as a nonwoven fabric is preferably used as a material-permeable substrate, wherein the organic material preferably comprises a polymer and particularly preferably polyethylene terephthalate (PET),
wherein the organic material is coated with an inorganic ion-conducting material which preferably conducts ions in a temperature range between -40°C and 200°C,
wherein the inorganic ion-conducting material preferably contains at least one compound from the group of oxides, phosphates, sulphates, titanates, silicates, aluminosilicates of one of the elements Zr, Al, Li, in particular zirconium oxide, and
wherein the inorganic ion-conducting material preferably comprises particles with a maximum diameter of 100 nm.

## Revendications

1. Cellule galvanique (1) comprenant un empilement (6) d'électrodes sensiblement prismatique, un électrolyte et un logement (5), qui est destiné pour renfermer au moins en partie l'empilement (6) d'électrodes, l'empilement (6) d'électrodes étant conçu en plusieurs couches et présentant au moins une couche d'anode (2), une couche de cathode (3) et une couche de séparateur (4), l'au moins une couche de séparateur (4) étant disposée au moins en partie entre une couche d'anode (2) et une couche de cathode (3), et l'au moins une couche de séparateur (4) recevant au moins en partie l'électrolyte, **caractérisée en ce que** sont reliées amovibles l'au moins une couche d'anode (2), l'au moins une couche de cathode (3) et l'au moins une couche de séparateur (4) au niveau d'au moins une zone de liaison (7, 7a) au moyen d'au moins un dispositif de liaison amovible (9, 9a, 9b, 10, 11) qui est sélectionné parmi des dispositif de fixation, des agrafes, des fils de couture, des dispositifs de serrage, des bornes, des bandes et des courroies périphériques, une réduction de l'effet de liaison de l'au moins un dispositif de liaison (9, 9a, 9b, 10, 11) amovible se produit au-dessus d'une certaine température prédéfinie de sorte que les couches adjacentes de l'empilement (6) d'électrodes s'éloignent les unes des autres au moins à certains endroits au-dessus d'une certaines température prédéfinie.

2. Cellule galvanique (1) selon la revendication 1, **caractérisé en ce qu'**un matériau de l'au moins un dispositif de liaison amovible se ramollit au-dessus d'une certaine température prédéfinie ou une constante de ressort de l'au moins un dispositif de liaison amovible chute au-dessus d'une certaine température prédéfinie.

3. Cellule galvanique (1) selon la revendication 1, **caractérisée en ce que** lorsque le dispositif de liaison est le dispositif de fixation (10) ou les agrafes (11) ou encore le dispositif de serrage (9, 9a), un additif est ajouté à l'électrolyte qui agit sur le dispositif de fixation (10) ou sur les agrafes (11) ou encore sur le dispositif de serrage (9, 9a) au-dessus d'une certaines température prédéfinie.

4. Cellule galvanique (1) selon au moins l'une quelconque des revendications précédentes, **caractérisée en ce que** l'empilement (6) d'électrodes présente au moins un bord de délimitation et l'empilement (6) d'électrodes est relié amovible au moyen du dispositif de liaison amovible (9, 9a, 9b) au moins en partie le long du bord de délimitation.

5. Cellule galvanique (1) selon l'au moins une quelconque des revendications précédentes, **caractérisée en ce que** l'au moins un dispositif de liaison amovible (9, 9a, 9b) présente un contact polaire (12, 12a) et/ou un élément de cadre (13), l'élément de cadre (13) entourant au moins en partie l'empilement (6) d'électrodes.

6. Cellule galvanique (1) selon au moins une quelconque des revendications précédentes, **caractérisée en ce que** le logement (5) est associé à un dispositif d'ouverture (15, 15a, 15b) qui est destiné à ouvrir le logement (5) dans certaines conditions prédéfinies.

7. Cellule galvanique (1) selon au moins une quelconque des revendications précédentes, **caractérisée en ce que** le logement (5) est situé au moins en partie sur l'empilement (6) d'électrodes, le logement (5) est relié en particulier dans une zone de scellement (8) en particulier par liaison de matière à l'empilement (6) d'électrodes, et/ou le logement (5) présente au moins une partie fine (14).

8. Cellule galvanique (1) selon au moins une quelconque des revendications précédentes, **caractérisée en ce que** la cellule galvanique (1) est associée à au moins un dispositif de mesure (16) et/ou à au moins un dispositif de refroidissement (11).

9. Cellule galvanique (1) selon au moins une quelconque des revendications précédentes, **caractérisée en ce que** la couche de séparateur (4) est constituée d'un non-tissé en fibres non électro-conductrices, le non-tissé étant revêtu sur au moins une face d'un matériau anorganique.

10. Cellule galvanique (1) selon au moins une quelconque des revendications précédentes, **caractérisée en ce que** l'au moins un séparateur est constitué d'un support perméable aux substances, de préférence partiellement perméable aux substances, autrement dit, sensiblement perméable à au moins un matériau et sensiblement imperméable à au moins un autre matériau, le support étant revêtu sur au moins une face d'un matériau anorganique, un matériau organique étant utilisé en tant que support perméable aux substances, qui de préférence est conçu en tant que non-tissé, le matériau organique présentant de préférence un polymère et de préférence encore un polyéthylène téréphtalate (PET), le matériau organique étant revêtu d'un matériau anorganique conducteur d'ions, qui est conducteur d'ions de préférence dans une plage de température comprise entre -40°C et 200°C, le matériau anorganique conducteur d'ions étant au moins une liaison provenant du groupe oxyde, phosphate, sulfate, titanate, silicate, aluminosilicate d'au moins un des éléments Zr, Al, Li, en particulier l'oxyde de zirconium, et le matériau conducteur d'ions anorganique présentant de préférence des particules dont le plus gros diamètre étant inférieur à 100 nm.
